Europäisches Patentamt

European Patent Office

Office européen des brevets

(11) Numéro de publication: **0 252 395**
**A1**

## (12) DEMANDE DE BREVET EUROPEEN

(21) Numéro de dépôt: **87109311.8**

(22) Date de dépôt: **29.06.87**

(51) Int. Cl.⁴: **B60C 15/04 , B29D 30/48**

(30) Priorité: **09.07.86 FR 8610372**

(43) Date de publication de la demande:
**13.01.88 Bulletin 88/02**

(84) Etats contractants désignés:
**AT BE CH DE ES FR GB GR IT LI LU NL SE**

(71) Demandeur: **MICHELIN & CIE (Compagnie Générale des Etablissements Michelin) Société dite:**
**4 rue du Terrail**
**F-63000 Clermont-Ferrand(FR)**

(72) Inventeur: **Davriu, Georges**
**1, allée des Chênes Mozac**
**F-63200 Riom(FR)**
Inventeur: **Rey, Maurice**
**13, allée Sud§La Raye-Dieu**
**F-63000 Clermont-Ferrand(FR)**

(74) Mandataire: **Doussaint, Jean-Marie et al**
**MICHELIN & CIE Service K. Brevets**
**F-63040 Clermont-Ferrand Cedex(FR)**

(54) **Tringle gainée pour enveloppes de pneumatiques; procédé pour réaliser cette tringle; enveloppes de pneumatiques comportant cette tringle.**

(57) Tringle (5) pour enveloppes de pneumatiques caractérisée en ce qu'elle comporte un ensemble (12) de fils recouvert par une gaine (13) réalisée avec une matière (17) dont le module sécant en extension, mesuré à 10 % d'allongement et à la température ambiante, est au moins égal à 70 MPa.

Procédé pour réaliser cette tringle.

Enveloppes de pneumatiques dont les bourrelets sont renforcés par au moins une tringle conforme à l'invention.

EP 0 252 395 A1

Fig: 2

L'invention concerne les enveloppes de pneumatiques et plus particulièrement les tringles destinées à renforcer les bourrelets de ces enveloppes.

Il est connu de gainer les tringles avec une gomme de caoutchouc que l'on vulcanise par exemple dans le moule en même temps que le reste de l'enveloppe. Ces tringles ainsi gainées présentent les inconvénients suivants.

Lorsque les tringles sont constituées par des fils disposés côte à côte sans être solidarisés entre eux, la faible tenue mécanique des gaines de caoutchouc ne permet pas une cohésion suffisante des tringles, de telle sorte que le transport de celles-ci est difficile, car il risque de provoquer une déformation des tringles. D'autre part, la déformation des gaines de caoutchouc à l'intérieur des enveloppes provoque une déformation des tringles, avec un déplacement relatif des fils de ces tringles, même si les tringles avaient une forme géométrique régulière lors de la réalisation des enveloppes. Cette instabilité géométrique conduit à un travail hétérogène des fils, ce qui provoque des détériorations des bourrelets qu'ils renforcent. On a tenté d'éviter ces inconvénients en assemblant les fils de place en place avec des colliers, par exemple des colliers métalliques, mais cet assemblage est délicat et coûteux à réaliser et il ne permet pas d'éviter dans tous les cas une déformation des tringles.

Lorsque les tringles sont constituées par des fils qui sont solidarisés entre eux de façon à former un ensemble ayant une forme géométrique stable, cette forme n'est souvent pas adaptée à la structure des bourrelets ainsi qu'aux contraintes existant dans les bourrelets, et les gaines de caoutchouc ne permettent pas une telle adaptation de forme par suite de la déformation de ces gaines.

Le but de l'invention est de remédier à ces inconvénients.

En conséquence la tringle pour enveloppe de pneumatique conforme à l'invention est caractérisée en ce qu'elle comporte un ensemble de fils recouvert par une gaine réalisée avec une matière dont le module sécant en extension, mesuré à 10 % d'allongement et à la température ambiante, est au moins égal à 70 MPa.

L'invention concerne également un procédé pour réaliser une tringle pour enveloppe de pneumatique, ce procédé consistant à surmouler autour d'un ensemble de fils une matière dont le module sécant en extension, mesuré à 10 % d'allongement et à la température ambiante, est au moins égal à 70 MPa.

L'invention concerne également les tringles pour enveloppes de pneumatiques obtenues selon ce procédé. L'invention concerne également les enveloppes de pneumatiques dont les bourrelets sont renforcés par au moins une tringle conforme à l'invention.

L'invention sera aisément comprise à l'aide des exemples non limitatifs qui suivent et des figures toutes schématiques relatives à ces exemples.

Sur le dessin :

-la figure 1 représente en coupe radiale une enveloppe de pneumatique dont chaque bourrelet est renforcé par une tringle conforme à l'invention ;

-la figure 2 représente plus en détail en coupe radiale un des bourrelets de l'enveloppe représentée à la figure 1, avec la tringle conforme à l'invention correspondant à ce bourrelet ;

-les figures 3 et 4 représentent chacune en coupe une autre tringle conforme à l'invention.

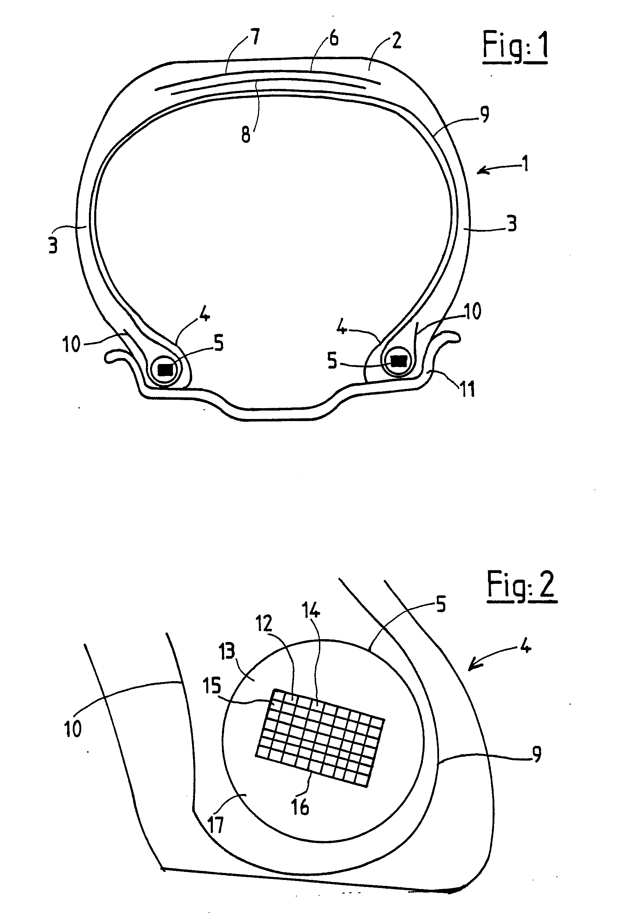

On voit à la figure 1 une enveloppe de pneumatique 1. Cette enveloppe 1 comporte un sommet 2, deux flancs 3 et deux bourrelets 4, chacun de ces bourrelets 4 étant renforcé avec une tringle 5 conforme à l'invention. Le sommet 2 est renforcé, de façon connue en soi, par un renfort de sommet 6, constitué par exemple par deux nappes croisées 7, 8 et une nappe carcasse radiale 9 s'étend d'un bourrelet 4 à l'autre en s'enroulant de façon connue autour de chacune de ces tringles 5, le retournement 10 de cette nappe carcasse 9 étant par exemple disposé vers l'extérieur de l'enveloppe 1 qui est représentée montée sur sa jante 11. Une portion d'un bourrelet 4 est représentée plus en détail à la figure 2. On voit sur cette figure 2 que la tringle 5 conforme à l'invention est constituée de deux parties :

-un ensemble 12 de fils ;

-une gaine 13 entourant cet ensemble 12.

L'ensemble 12 est du type dit "paquet" analogue à celui qui est décrit par exemple dans la demande de brevet français 82/08751, publiée sous le n° 2 526 708. Cet ensemble 12 est constitué d'un fil 14 enroulé en spires 15. La section de ce fil 14 par un plan radial, c'est-à-dire un plan passant par l'axe de la tringle, qui est l'axe de révolution de l'enveloppe 1, est une section rectangulaire. Les spires 15 sont appliquées les unes contre les autres par simple contact, c'est-à-dire sans collage sur l'ensemble des zones de contact entre elles, et l'ensemble 12 a une section générale rectangulaire dans le plan radial précédemment décrit. La face radialement intérieure 16 de l'ensemble 12 est tronconique et lisse, et cet ensemble est par exemple fabriqué d'après le procédé décrit dans le brevet FR 2 456 610. Ce procédé consiste essentiellement à conférer au fil d'acier 14, préalablement à son enroulage sur la forme de fabrication, une déformation permanente au moyen d'une flexion déviée appropriée. Ainsi, dans une même couche, et d'une couche à la suivante, les spires 15 juxtaposées et superposées sont bien alignées les unes sur les autres. Il en résulte aussi que le fil 14 ainsi traité est dépourvu de contraintes élastiques résiduelles et les spires 15 n'ont plus tendance à se dérouler spontanément.

Conformément à l'invention, la gaine 13 est réalisée avec une matière 17 dont le module sécant en extension est au moins égal à 70 MPa, ce module étant mesuré à température ambiante, de l'ordre de 20°C, et à 10 % d'allongement. De préférence ce module est au moins égal à 400 MPa. Cette gaine 13 est réalisée de préférence avec une matière 17 thermoplastique en surmoulant cette matière 17 par injection autour de l'ensemble 12 que l'on a disposé au préalable dans le moule d'injection.

A titre d'exemple, la tringle 5 a les caractéristiques suivantes :

-fil 14 : fil d'acier, la section rectangulaire de ce fil ayant les dimensions 2 x 1,3 mm ;

-ensemble 12 : il est constitué par 7 couches de 9 fils chacune et comporte donc 63 spires, l'empilage des couches se faisant dans le sens de la plus petite dimension de la section rectangulaire du fil 14 ; cet ensemble a donc, dans un plan radial, une forme rectangulaire dont les dimensions sont environ 18 mm x 9,1 mm ;

-la gaine 13 est réalisée avec un polyamide 6 par surmoulage, comme précédemment décrit ; ce polyamide 6 a un allongement à la rupture mesuré à la température ambiante (environ 20°C) d'environ 40 % et un module sécant en extension d'environ 500 MPa, ce module étant mesuré à 10 % d'allongement et à la température ambiante ; cette gaine 13 a une section radiale pratiquement circulaire de rayon 12 mm.

-la tringle 5 a un diamètre intérieur de 565mm, et l'enveloppe de pneumatique 1 comportant les deux tringles 5 est une enveloppe de pneumatique pour véhicule poids lourds de dimension 12 x 22,5 ; la jante 11 sur laquelle est montée l'enveloppe 1 est une jante à seat conique.

Les avantages de la tringle 5 sont les suivants :

-la gaine 13 permet de solidariser les spires 15 de fil 14 ; ces spires ne peuvent donc plus se séparer les unes des autres lors des manipulations de la tringle 5, par exemple lorsqu'on la transporte ou qu'on la dispose sur un tambour pendant la confection de l'enveloppe 1 ;

-la gaine 13 permet à la tringle 5 de conserver une forme géométrique constante lors des roulages de l'enveloppe, sans désolidarisation des spires 15, le travail des spires 15 est donc homogène pendant toute la durée de vie de l'enveloppe 1.

La cohésion de la tringle 5 est obtenue de façon simple par moulage de la gaine 13 autour de l'ensemble 12 disposé dans un moule. Pour obtenir une cohésion minimale de l'ensemble 12, lors de la réalisation de la gaine 13, lorsqu'on dispose cet ensemble 12 dans le moule, il suffit par exemple de disposer un nombre limité d'agrafes autour de cet ensemble 12, on d'interposer à intervalles irréguliers ou réguliers des morceaux de ruban adhésif entre les couches de spires, conformément à la demande de brevet 82/08751 précitée.

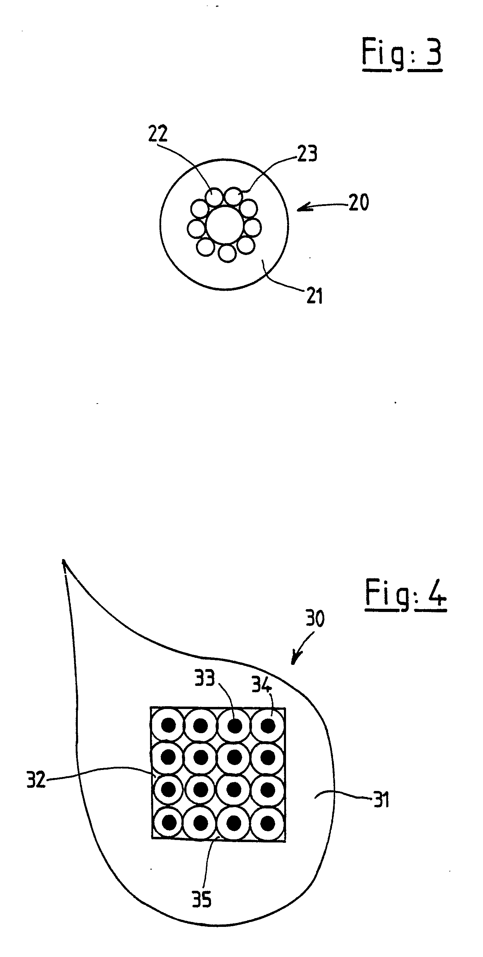

L'invention n'est pas limitée aux ensembles du type paquet précédemment décrit et peut s'appliquer à d'autres types d'ensembles de fils de renfort, comme montré aux figures 3 et 4.

La tringle 20 conforme à l'invention, représentée à la figure 3 comporte une gaine 21 disposée autour d'un ensemble 22 de fils 23 tressés.

La tringle 30 conforme à l'invention représentée à la figure 4 comporte une gaine 31 disposée autour d'un ensemble 32 conforme à la demande de brevet français 85/00875. Cet ensemble 32 comporte plusieurs fils 33 entourés chacun individuellement par une gaine 34 et une matrice 35 dans laquelle sont disposés les fils 33 avec leur gaine 34. Les gaines 34 de deux fils 33 voisins sont en contact entre elles, c'est-à-dire que la distance entre deux fils 33 voisins est constante et égale au double de l'épaisseur de la gaine 34, ce qui garantit une forme géométrique déterminée et évite les contacts directs entre les fils 33. On obtient ainsi des performances homogènes pour l'ensemble 32 en évitant les risques d'usure des fils 33 entre eux. L'ensemble 32 est réalisé par double gainage, comme décrit dans la demande de brevet français 85/00875 précitée, les gaines 34 étant réalisées par exemple en polyamide 66 et la matrice 35 étant réalisée par exemple en polyamide 6, la gaine 31 étant réalisée par exemple aussi en polyamide 6 qu'on moule autour de l'ensemble 32 après réalisation de celui-ci.

A titre d'exemple, la tringle 30 a les caractéristiques suivantes :

-fils 33 : fils en acier ; diamètre de chaque fil : 1 mm ; nombre de fils (c'est-à-dire de spires) dans la tringle : 16, la tringle ayant une section carrée avec quatre couches de quatre spires chacune, les côtés de cette section carrée étant tangents aux gaines 34 des fils 33 situés à proximité de ces côtés ;

-gaines 34 : épaisseur égaleà 0,5 mm ; matière de ces gaines : polyamide 66 ; température de fusion : 255°C; module sécant en extension, mesuré à 10 % d'allongement environ : 550 MPa ; on préchauffe les fils 33 avant réalisation des gaines 34 de façon connue en soi pour provoquer une bonne adhésion entre les fils 33 et la matière des gaines 34 ;

-matrice 35 : matière de cette matrice : polyamide 6 ; température de fusion de cette matière : 220°C ; module sécant en extension, mesuré à 10 % d'allongement : environ 500 MPa ; avant réalisation de l'ensemble 32, la matière de la matrice 35 se présente sous la forme d'une gaine solide extérieure épaisse de 0,13 mm disposée autour de la gaine 34, ces deux gaines entourant individuellement chaque fil 33, conformément à la demande de brevet français précitée 85/00875 ; on provoque la fusion de cette gaine extérieure, sans qu'il y ait fusion de la gaine 34, on enroule ensuite les seize spires de fils 33 dans la gorge d'un tambour pour provoquer la formation de la matrice 35 par migration de la matière de cette matrice entre les gaines 34 solides, et on provoque la solidification de cette matrice 35, la gorge du tambour servant de moule à l'ensemble 32 ainsi obtenu ;

-gaine 31 : cette gaine est obtenue en surmoulant un polyamide 6 autour de l'ensemble 32 après réalisation de celui-ci, c'est-à-dire qu'on utilise par exemple la même matière pour la gaine 31 et la matrice 35 ;

-la tringle 30 ainsi obtenue a un diamètre intérieur de 355 mm et elle est employée dans une enveloppe de pneumatique de dimension 175 x 14 utilisée pour véhicule tourisme.

Les valeurs géométriques et les modules donnés précédemment pour la tringle 30 sont déterminés à 20°C.

L'ensemble 32 est obtenu avec une section carrée et l'invention permet d'entourer cet ensemble avec une gaine 31 dont la forme est différente d'un carré pour adapter cette forme à la structure et aux conditions de fonctionnement du bourrelet de l'enveloppe où elle est disposée.

La forme de la gaine des tringles conformes à l'invention n'est pas nécessairement circulaire, c'est ainsi que la gaine 31 de la tringle 30 représentée à la figure 4 a une forme dite "en goutte d'eau", ce qui peut avoir l'avantage de permettre un meilleur ancrage de cette tringle dans le bourrelet qu'elle renforce.

Dans tous les exemples de tringles précédemment décrits, la gaine est disposée à l'extérieur de l'ensemble de fils et elle ne joue donc pas le rôle d'une matrice entre les fils de cet ensemble. L'effet de la gaine sur l'ensemble est donc uniquement externe, cette gaine permettant notamment de transmettre de façon homogène les efforts de la carcasse vers les fils de renfort de l'ensemble, à l'intérieur de la tringle. La capacité d'allongement de la gaine facilite cette transmission des efforts, la matière de la gaine ayant, de préférence, pour cela un allongement à la rupture au moins égal à 15 % et au plus égal à 200 %, cet allongement à la rupture étant mesuré à la température ambiante (environ 20°C). De préférence la matière de la gaine est une matière thermoplastique dont le point de fusion est supérieur à 200°C pour améliorer la résistance de la tringle à un échauffement accidentel du bourrelet, dû par exemple à un blocage de frein.

Bien entendu, l'invention n'est pas limitée aux exemples de réalisation précédemment décrits.

**Revendications**

1. Tringle pour enveloppe de pneumatique caractérisée en ce qu'elle comporte un ensemble de fils recouvert par une gaine réalisée avec une matière dont le module sécant en extension, mesuré à 10 % d'allongement et à la température ambiante, est au moins égal à 70 MPa.

2. Tringle selon la revendication 1 caractérisée en ce que ce module est au moins égal à 400 MPa.

3. Tringle selon l'une quelconque des revendications 1 ou 2 caractérisée en ce que la matière a un allongement à la rupture au moins égal à 15 % et au plus égal à 200 %, cet allongement à la rupture étant mesuré à la température ambiante.

4. Tringle selon l'une quelconque des revendications 1 à 3 caractérisée en ce que la matière est une matière thermoplastique.

5. Tringle selon la revendication 4 caractérisée en ce que la matière a un point de fusion supérieur à 200°C.

6. Tringle selon l'une quelconque des revendications 4 ou 5 caractérisée en ce que la matière est un polyamide.

7. Tringle selon l'une quelconque des revendications 1 à 6 caractérisée en ce que la gaine est surmoulée autour de l'ensemble.

8. Tringle selon l'une quelconque des revendications 1 à 7 caractérisée en ce que les fils de l'ensemble sont appliqués les uns contre les autres par simple contact.

9. Procédé pour réaliser une tringle pour enveloppe de pneumatique consistant à surmouler autour d'un ensemble de fils une matière dont le module sécant en extension, mesuré à 10 % d'allongement et à la température ambiante, est au moins égal à 70 MPa.

10. Procédé selon la revendication 9 caractérisé en ce que ce module est au moins égal à 400 MPa.

11. Procédé selon l'une quelconque des revendications 9 ou 10 caractérisé en ce que la matière a un allongement à la rupture au moins égal à 15 % et au plus égal à 200 %, cet allongement à la rupture étant mesuré à la température ambiante.

12. Procédé selon l'une quelconque des revendications 9 à 11 caractérisé en ce que la matière est une matière thermoplastique.

13. Procédé selon la revendication 12 caractérisé en ce que la matière a un point de fusion supérieur à 200°C.

14. Procédé selon l'une quelconque des revendications 12 ou 13 caractérisé en ce que la matière est un polyamide.

15. Tringle pour enveloppe de pneumatique obtenue selon le procédé conforme à l'une quelconque des revendications 9 à 14.

16. Enveloppe de pneumatique comportant des bourrelets, chaque bourrelet étant renforcé avec au moins une tringle conforme à l'une quelconque des revendications 1 à 8 et 15.

0 252 395

Fig:1

Fig:2

<u>Fig: 3</u>

22

23

20

21

<u>Fig: 4</u>

30

33

34

32

31

35

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | US-A-4 320 791 (KATSUHIKO FUJII) <br> * Colonne 3, lignes 3-24 * | 1,2 | B 60 C 15/04 <br> B 29 D 30/48 |
| | --- | | |
| A | FR-A-2 103 110 (DUNLOP) | 9,10 | |
| | --- | | |
| A | US-A-3 612 139 (A. MARZOCCHI) | | |
| | --- | | |
| A | FR-A-2 234 126 (FIVEREL) | | |
| | ----- | | |

**DOMAINES TECHNIQUES RECHERCHES (Int. Cl.4)**

B 60 C
B 29 D

Le présent rapport de recherche a été établi pour toutes les revendications

| Lieu de la recherche <br> LA HAYE | Date d'achèvement de la recherche <br> 30-09-1987 | Examinateur <br> SCHMITT L.P. |
|---|---|---|